# EUROPÄISCHE PATENTSCHRIFT

(11) **EP 2 296 841 B1**
(45) Veröffentlichungstag und Bekanntmachung des Hinweises auf die Patenterteilung: **05.06.2013**
(21) Anmeldenummer: 09802523.2
(22) Anmeldetag: 29.07.2009
(51) Int. Cl.: B23K 26/22, B23K 26/42, B23K 26/08, B23K 26/14

(54) **LASER-SCHWEISSWERKZEUG MIT EINEM FASERLASER**
LASER WELDING TOOL WITH A FIBRE LASER
OUTIL DE SOUDAGE LASER AVEC UN LASER FIBRE

(30) Priorität: 30.07.2008 EP 08104923
(43) Veröffentlichungstag der Anmeldung: 23.03.2011
(73) Patentinhaber: IPG Photonics Corporation, Oxford, Massachusetts 01540 (US)
(72) Erfinder: HEINZ, Heribert, 57537 Wissen (DE); KESSLER, Berthold, 35753 Arborn (DE)
(74) Vertreter: Kohlmann, Kai
(86) Internationale Anmeldenummer: PCT/EP2009/059831
(87) Internationale Veröffentlichungsnummer: WO 2010/012791

(56) Entgegenhaltungen:
- JP-A- 6 015 471
- JP-A- 7 032 177
- JP-A- 58 053 384
- JP-A- 2004 306 057
- US-A1- 2003 213 786
- US-A1- 2007 119 829

## Beschreibung

Die Erfindung betrifft ein Laser-Schweißwerkzeug zur Erzeugung einer Schweißnaht zum Verbinden von Werkstücken gemäβ dim Oberbegriff des Anspruchs 1 (siche, z.B., JP 58/053 384).

In der Automobilindustrie sowie der Zulieferindustrie wird nach wie vor überwiegend das Widerstandsschweißen, im Karosseriebau zumeist mit Hilfe Roboter geführter Schweißzangen durchgeführt. Das Widerstandsschweißen ist ein Schweißverfahren für elektrisch leitfähige Werkstoffe auf Basis der Jouleschen-Stromwärme eines durch die Verbindungsstelle fließenden elektrischen Stroms. Durch die Stromwärme werden die zu verbindenden Werkstücke bis zum Aufschmelzen erhitzt. Durch das Wiedererstarren der Schmelze entsteht eine Schweißverbindung. Die miteinander zu verbindenden Werkstücke werden üblicherweise durch Schweißzangen während und nach dem Stromfluss zusammengedrückt, wodurch die Bildung einer innigen Verbindung unterstützt wird.

Daneben gewinnt jedoch das Laserstrahlschweißen zunehmend an Bedeutung. Laserstrahlschweißen wird vor allem zum Verschweißen von Werkstücken eingesetzt, die mit hoher Schweißgeschwindigkeit, schmaler und schlanker Schweißnaht und mit geringem thermischem Verzug gefügt werden müssen. Das Laserstrahlschweißen oder auch Laserschweißen genannt, wird, wie das Widerstandsschweißen, in der Regel ohne Zuführung eines Zusatzwerkstoffes ausgeführt.

Die Laserstrahlung wird mittels eines Kollimators fokussiert. Die Werkstückoberfläche der Stoßkante bzw. der Fügestoß der zu verschweißenden Werkstücke befindet sich in der unmittelbaren Nähe des Fokus des Kollimators, der beim Laserstrahlschweißen auch als Brennfleck bezeichnet wird. Der Brennfleck besitzt typische Durchmesser von 0,5 bis 1,0 mm, wodurch sehr hohe Energiekonzentrationen entstehen. Durch Absorption der Laserleistung erfolgt auf der Werkstückoberfläche ein extrem schneller Anstieg der Temperatur über die Schmelztemperatur des Metalls hinaus, so dass sich eine Schmelze bildet. Den Vorteilen des Laserschweißens stehen jedoch hohe Anschaffungskosten, ein schlechter Wirkungsgrad sowie ein hoher Aufwand für Sicherheitseinrichtungen gegenüber. Hinzu kommt, dass aktuell in der Industrie eingesetzte Gas- oder Festkörperlaser-Schweißgeräte große Abmessungen aufweisen und für den Einsatz in der Automobilindustrie nicht geeignet sind. Ein Beispiel für ein Laserschweißsystem dessen Laserstrahlen mittels eines Linearantriebs entlang der Schweißnaht bewegbar sind, ist beispielsweise aus der JP 2004-243393 bekannt.

Die JP 58 053384 offenbart ein Laser-Schweißwerkzeug mit einem an einem horizontalen Arm schwenkbar angeordneten Hebel. An der Spitze des horizontalen Armes befindet sich ein wassergekühltes Bauteil, das an der Unterseite von zwei zu verschweißenden Platten zur Anlage bringbar ist. Gegenüber dem Bauteil befindet sich ein an der Spitze des Hebels angeordnetes Bauteil, das an der Oberseite der zwei zu verschweißenden Platten zur Anlage bringbar ist. Mittels eines Hubzylinders lassen sich der Arm und der Hebel gegeneinander bewegen, so dass die zu verschweißenden Platten zwischen den Bauteilen eingeklemmt werden. Nach dem Einklemmen der zu verschweißenden Platten wird in einer außen an dem Hebel angeordneten Laservorrichtung Laserstrahlung erzeugt, die durch den rinnenförmigen Hebel auf einen Reflektor trifft, der die Strahlung in Richtung der zu verschweißenden Platten umlenkt.

Der Reflektor ist in dem oberen Bauteil an der Spitze des Hebels verschieblich angeordnet und mittels eines außerhalb des Hebels angeordneten Zylinders hin- und her verschieblich, um die Schweißnaht auf dem Bauteil zu erzeugen.

Die US 2007/119829 A1 offenbart eine Laser-Schweißvorrichtung für den mobilen Einsatz zur Herstellung ringförmiger Schweißnähte an den Verbindungsstellen von Rohren einer Pipeline. Von einer auf einem separaten Transportfahrzeug angeordneten Laserstrahlungsquelle gelangt über einen Lichtleiter die Laserstrahlung zu einem Laser-Schweißkopf, der ringförmig um die Ringnaht der Rohre herum bewegbar ist. Der Schweißkopf befindet sich im Abstand von der Schweißzone.

Die US 2003/213786 A1 betrifft ein handgeführtes LaserSchweißgerät, bei dem die Laserstrahlung von einer entfernten Laserstrahlungsquelle einer Düse des Handgerätes zugeführt wird, die von Öffnungen für Schweißpulver umgeben ist. Ein Näherungsschalter kann die Schweißoperation von der Gegenwart eines Werkstücks abhängig machen.

Die JP 06 015471 A offenbart ein zangenförmiges Laser-Schweißwerkzeug mit einem unteren und einem oberen Klemmstück, zwischen dem die zu verschweißenden Werkstücke zusammengepresst werden können. In dem zylindrischen, konisch in Richtung einer Austrittsöffnung zulaufenden oberen Klemmstück befindet sich ein Laser, so dass kein Laserlicht aus dem oberen Klemmstück austreten kann.

Ausgehend von diesem Stand der Technik liegt der Erfindung die Aufgabe zu Grunde, ein Laser-Schweißwerkzeug für Schweißvorgänge in der Automobilindustrie zu schaffen, das sich in die bestehende Infrastruktur zum Widerstandsschweißen integrieren lässt, insbesondere eine Weiterverwendung vorhandener Bauteilwerkzeuge und Handhabungseinrichtungen für die Schweißwerkzeuge ermöglicht, das die erforderliche Personensicherheit bei einer üblichen Laser-Schweißleistung im Automobilbau (bis zu 2 KW) gewährleistet und die konzeptbedingten Nachteile industrieller Laser-Schweißwerkzeuge, insbesondere die hohen Anschaffungskosten, den schlechten Wirkungsgrad sowie den hohen Sicherheitsaufwand reduziert.

Ein Laserschweißwerkzeug gemäβ des Erfindung ist im Anspruch 1 definiert.

Der Einsatz von Faserlasern mit kompakten Abmessungen und flexibel gestaltbaren Laserquellen erlaubt die Integration des Laser-Schweißwerkzeugs in die Infrastruktur herkömmlicher Widerstandsschweißeinrichtungen für die Automobilindustrie.

Die Laserstrahlung lässt sich mit Hilfe der Faser zur Lichtleitung in die Nähe der herzustellenden Schweißnaht nach Art eines Kabels führen, so dass das Laserschweißen auch unter beengten Verhältnissen, wie diese häufig bei der Fügung von Werkstücken in der Automobilindustrie anzutreffen sind, zum Einsatz gelangen kann. Gleichzeitig zeichnen sich Faserlaser durch eine gegenüber Gas- und Festkörperlasern höhere Strahlqualität, einen höheren Wirkungsgrad von derzeit über 30 %, geringere Unterhaltskosten und zugleich niedrigere Anschaffungskosten aus.

Der dotierte Kern der Faser, insbesondere Glasfaser, bildet bei einem Faserlaser das aktive Medium. Die in die Faser eingekoppelte und durch diese hindurch geleitete Laserstrahlung erfährt aufgrund der großen Länge der Faser eine hohe Verstärkung. Faserlaser werden optisch gepumpt, in dem parallel zum Faserkern oder in die Faser die Laserstrahlung von Laserdioden eingekoppelt wird.

Um bei der Erstellung der Schweißnähte, seien es nun durchgängige Nähte oder Punktnähte, die geforderte Personensicherheit zu gewährleisten ist der Kollimator derart beweglich in dem Gehäuse angeordnet und ausgerichtet, dass die Laserstrahlen ausschließlich durch den Austrittsschlitz hindurch aus dem Gehäuse austreten können. Darüber hinaus wird die Laserleistung des Faserlasers erst dann aktiviert, wenn der Austrittsschlitz auf dem Werkstück aufsitzt. Die Aktivierung des Faserlasers beim Aufsitzen des Austrittsschlitzes auf einem der Werkstücke wird, gemäβ der Erfindung, durch ein an dem Gehäuse angeordnetes Schaltelement bewirkt, das beim Aufsitzen des Austrittsschlitzes die Energieversorgung des Faserlasers einschaltet. Das Schaltelement kann ein unmittelbar zu dem Austrittsschlitz benachbarter Kontakt, ein Sensorelement oder ein Tastschalter sein. Alternativ kann ein beweglicher, den Austrittsschlitz umfassender Gehäuseteil zugleich als Schaltelement fungieren.

Durch die Kombination dieser Maßnahmen kann die Schweißnaht entlang der vorgegebenen Bewegungslinie erzeugt werden, ohne dass von dem Laser-Schweißwerkzeug, selbst dann, wenn es an einem Roboterarm befestigt ist, irgendeine Gefahr für im Arbeitsumfeld des Roboters befindliche Personen ausgeht.

Eine Behinderung des Schweißvorgangs durch Gehäusekanten wird weitgehend vermieden, wenn sich das Gehäuse in Richtung des Austrittsschlitzes trichterförmig verjüngt.

Herkömmliche Widerstandsschweißeinrichtungen in Form von Punktschweißzangen werden in der Automobilindustrie üblicherweise mittels eines Schweißroboters bewegt. Um diese Arbeitsabläufe unverändert beibehalten zu können, ist das Laser-Schweißwerkzeug vorzugsweise als Schweißzange mit einem Zangengestell, einem an dem Zangengestell angeordneten, insbesondere C-förmigen Unterwerkzeug und einer das Gehäuse gegenüber dem Zangengestell bewegenden Verfahreinheit ausgestaltet, wobei sich am freien Ende des Unterwerkzeugs ein mit diesem fluchtendes Druckstück befindet und das Druckstück und die damit fluchtende Austrittsöffnung mittels der Verfahreinheit aufeinander zu und voneinander wegbewegbar sind. Das Druckstück bildet das Gegenlager beim kraftorientierten Zusammenfahren von Gehäuse und Unterwerkzeug.

Eine optimierte Lastabtragung beim Zusammenfahren der Schweißzange wird dadurch erreicht, dass das Druckstück der Form der Austrittsschlitzes entspricht.

Zur Modularisierung und damit Kostenreduktion des erfindungsgemäßen Laser-Schweißwerkzeuges ist es vorgesehen, dass die Verfahreinheit ein an dem Zangengestell gehaltenen Stellantrieb, eine Gehäuseaufnahme sowie eine Linearführung für die Gehäuseaufnahme aufweist. Die Gehäuseaufnahme ist vorzugsweise so beschaffen, dass unterschiedliche Gehäuse in kurzer Zeit an der Gehäuseaufnahme befestigbar sind. Eine Anpassung an unterschiedliche Schweißbedingungen ist daher ohne weiteres möglich.

Das Gehäuse umfasst zumindest den Kollimator, den dem Kollimator zugeordneten Linearantrieb sowie die insbesondere trichterförmige Umhausung des Laserstrahls. Um eine gleichmäßige Bewegung des Kollimators und damit des Laserstrahls bzw. das Anfahren und Beibehalten vorgegebener Positionen für den Kollimator exakt steuern zu können, weist der Linearantrieb für den Kollimator einen einachsigen Linearschlitten auf, der mit einem Stellantrieb verbunden ist. Der Stellantrieb wird insbesondere als Servomotor ausgeführt. In Betracht kommen Elektro- und Hydraulikmotoren.

Um die geöffnete Laser-Schweißzange mit einem Roboter rasch an den zu verschweißenden Werkstücken in Position bringen zu können, ist in vorteilhafter Ausgestaltung der Erfindung vorgesehen, dass das Zangengestell auf einem Ausgleichsmodul angeordnet ist, das geringfügige Ausgleichsbewegungen des Zangengestells gegenüber einem Roboterarm zur Bewegung des Laser-Schweißwerkzeugs zulässt. Beim Anfahren der Schweißposition befindet sich das Druckstück des Unterwerkzeugs in einem definierten Abstand zu einem der Werkstücke, von beispielsweise 2 bis 3 mm. Die Austrittsöffnung des Laser-Moduls befindet sich bei geöffneter Schweißzange beispielsweise 150 mm von dem zu verschweißenden Werkstück. Erst nach dem Anfahren der Schweißposition werden zunächst das Unterwerkzeug mit Hilfe des Ausgleichsmoduls und dann das Gehäuse (Oberwerkzeug) an den Werkstücken zur Anlage gebracht. Geringfügig unterschiedliche Positionen der zu verschweißenden Werkstücke in Bezug auf eine definierte Schweißposition der Schweißzange stellen daher für das Anfahren der Schweißposition kein Problem dar.

Damit sich das Unterwerkzeug des Laser-Schweißwerkzeuges stets an dem Werkstück schwimmend ausrichtet, ohne die Position des Werkstücks zu verändern, ist in einer Ausgestaltung der Erfindung vorgesehen, dass das Ausgleichsmodul ein Ausgleichsgrundgestell zur Befestigung an einem Roboterarm aufweist, an dem Ausgleichsrundgestell eine Linearführung für das Zangengestell mit übereinstimmender Bewegungsrichtung wie die Linearführung für die Gehäuseaufnahme angeordnet ist und das Ausgleichsmodul einen auf das Zangengestell wirkenden Kurzhub-Linearantrieb aufweist, in dessen geradlinig wirkendem Kraftfluss eine Federdruckeinheit geschaltet ist.

Nachfolgend wird die Erfindung anhand der Figuren näher erläutert. Es zeigen:
- **Figur 1a**: eine perspektivische Ansicht einer erfindungsgemäßen Laser-Schweißzange in geöffnetem Zustand
- **Figur 1b**: eine Laser-Schweißzange nach Figur 1a in geschlossenem Zustand
- **Figur 2a**: eine Seitenansicht und eine Aufsicht auf eine geöffnete Laser-Schweißzange nach Figur 1
- **Figur 2b**: eine Seitenansicht und eine Aufsicht auf eine geschlossene Laser-Schweißzange nach Figur 1 sowie
- **Figur 3**: eine schematische Darstellung des Funktionsprinzips der Laser-Schweißzange nach Figuren 1 und 2

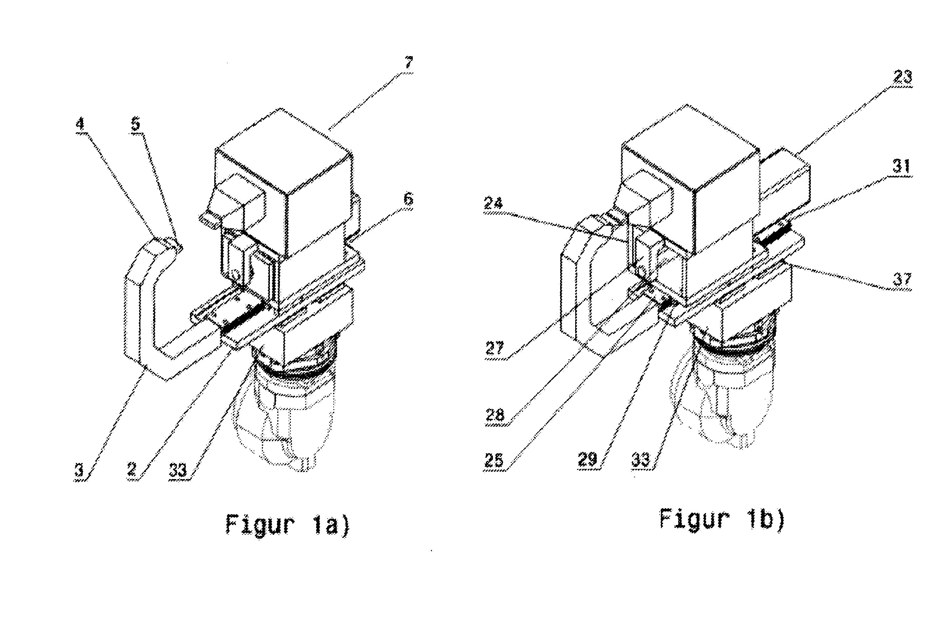

Figur 1 zeigt eine Laser-Schweißzange (1) mit einem als Platte ausgeführten Zangengestell (2), einem an dem Zangengestell (2) angeordneten, im Wesentlichen C-förmigen Unterwerkzeug (3), wobei sich am freien Ende (4) des Unterwerkzeugs (3) ein Druckstück (5) befindet. Auf dem Zangengestell (2) ist eine insgesamt mit (6) bezeichnete Verfahreinheit angeordnet, die das insgesamt mit (7) bezeichnete Lasermodul (7) in Richtung des Druckstücks (5) bzw. von diesem weg bewegt.

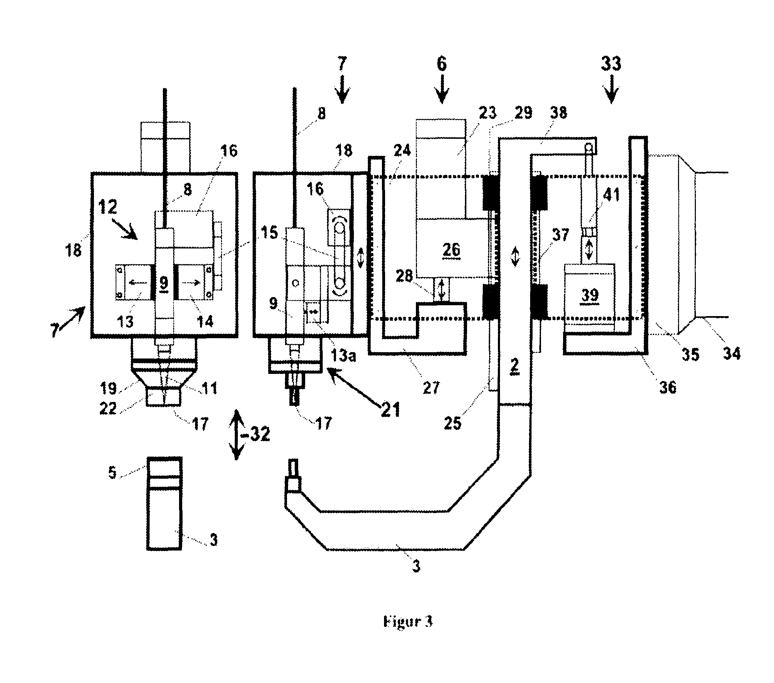

Unter Bezugnahme auf die schematische Darstellung in Figur 3 werden zunächst der Aufbau und die Funktionsweise des Laser-moduls (7) näher erläutert. Der Laser ist, gemäβ der Erfindung, als Faserlaser ausgestaltet. Die Laserstrahlung einer Laserdiode wird über eine in der Figur 3 nicht dargestellte Optik zum Einkoppeln der Laserstrahlung in eine Faser (8) eingekoppelt, die als flexibler Leiter in das gekapselte Lasermodul (7) geleitet wird. Dort ist die Faser (8) mit einem Kollimator (9) zur Fokussierung der Laserstrahlung (11) verbunden. Der insgesamt mit (12) bezeichnete Linearantrieb für den Kollimator (9) weist einen in Richtung der einzigen Achse (13) beweglichen Linearschlitten (14) auf, der im dargestellten Ausführungsbeispiel über ein Zugmittelgetriebe (15) mit einem als Servomotor ausgestalteten Stellantrieb (16) verbunden ist.

Der Linearantrieb (12) mit dem Kollimator (9) einschließlich eines Teilstücks der Faser (8) sind in einem einen Austrittsschlitz (17) für die Laserstrahlung (11) aufweisenden Gehäuse (18) angeordnet, das sich in Richtung des Austrittsschlitzes (17) in einem Abschnitt (19) eines Gehäusefortsatzes (21) trichterförmig verjüngt.

Wie aus der Aufsicht in Figur 3 erkennbar, wird die Laserstrahlung (11) vollständig von dem Gehäuse (18), insbesondere dem Gehäusefortsatz (21) mit dem trichterförmigen Abschnitt (19) umhaust. Dadurch ist gewährleistet, dass die Laserstrahlung (11) ausschließlich aus dem Austrittsschlitz (17) austreten kann.

Die Laserenergie zur Aktivierung des Faserlasers wird durch ein stirnseitig des sich verjüngenden Abschnitts (19) angeordnetes Druckstück (22) aktiviert, das beim Aufsetzen auf einem der Werkstücke und optional dem Aufbau einer definierten Kraft die Freigabe bewirkt. Sobald, gemäβ der Erfindung, der metallische Austrittschlitz (17), der zugleich als Kontakt dient, auf dem Werkstück aufsitzt, wird ein Stromkreis geschlossen, in dem beispielsweise über einen Optokoppler die Laserenergie aktiviert wird. Zusätzlich kann die Aktivierung von dem Aufbau einer hinreichenden Druckkraft zwischen den Druckstücken (5,22) der Schweißzange abhängig gemacht werden. Die Kraftmessung erfolgt mittels Kraftsensoren im Kraftfluss der Zange, beispielsweise an oder in Verlängerung des Unterwerkzeugs (3).

Das vorstehend beschriebene Lasermodul (7) ist derart auf der Verfahreinheit (6) angeordnet, dass das Druckstück (22) des Lasermoduls (7) mit dem Druckstück (5) des Unterwerkzeugs (3) fluchtet.

Der Aufbau und die Funktionsweise der Verfahreinheit (6) werden ebenfalls anhand von Figur 3 näher erläutert. Die Verfahreinheit (6) weist einen an dem Zangengestell (2) gehaltenen Stellantrieb (23) in Form eines Servomotors, eine Gehäuseaufnahme (24) sowie eine als Führungsschiene ausgebildete Linearführung (25) für die Gehäuseaufnahme (24) auf. Der Stellantrieb (23) ist mittels einer Halterung (26) an dem Zangengestell (2) befestigt.

Die Gehäuseaufnahme (24) ist, wie insbesondere aus Figuren 1a und 1b ersichtlich, als Rechteckprofil ausgestaltet, an dessen dem Unterwerkzeug zugewandter Stirnseite ein Haltewinkel (27) befestigt ist, an dem eine Antriebsstange (28) des Servomotors (23) angreift. An der Unterseite der Gehäuseaufnahme (24) sind Führungselemente (29) angeordnet, die in entsprechenden Nuten (31) der Führungsschiene (25) greifen. Mittels des Stellantriebs (23) der Verfahreinheit (6) ist das Lasermodul (7) über eine frei programmierbare Strecke (32) bis an das Werkstück verfahrbar.

Schließlich ist an der Unterseite des plattenförmigen Zangengestells (2) ein Ausgleichsmodul (33) relativ beweglich zu dem Zangengestell (2) angeordnet, das geringfügige Ausgleichsbewegungen des Zangengestells (2) gegenüber einem Roboterarm (34) zulässt. Der Roboterarm (34) ist mit dem Ausgleichsmodul (33) der Schweißzange (1) über einen Wechselflansch (35) verbunden.

Der Aufbau des Ausgleichsmoduls (33) wird nun unter Bezugnahme auf die schematische Darstellung in Figur 3 näher erläutert. An dem Wechselflansch (35) ist ein Ausgleichsgrundgestell (36) mit einer Linearführung (37) für das Zangengestell (2) befestigt. Die Linearführung (37) weist eine übereinstimmende Bewegungsrichtung wie die Linearführung (25) für die Gehäuseaufnahme (24) auf.

An dem dem Unterwerkzeug (3) gegenüberliegenden Ende des Zangengestells (2) ist ein Befestigungsflansch (38) angeordnet. Zwischen dem Befestigungsflansch (38) und dem Ausgleichsgrundgestell (36) ist ein auf das Zangengestell (2) wirkender Kurzhub-Zylinder (39) sowie eine Federdruckeinheit (41) zwischengeschaltet. Die Federdruckeinheit (41) ist in die Kolbenstange des Kurzhub-Zylinders (39) derart integriert, dass der gradlinig wirkende Kraftfluss nicht beeinträchtig wird. Zu diesem Zweck kann eine von einer Hülse umgebene Druckfeder als Federdruckeinheit in die Kolbenstange integriert sein.

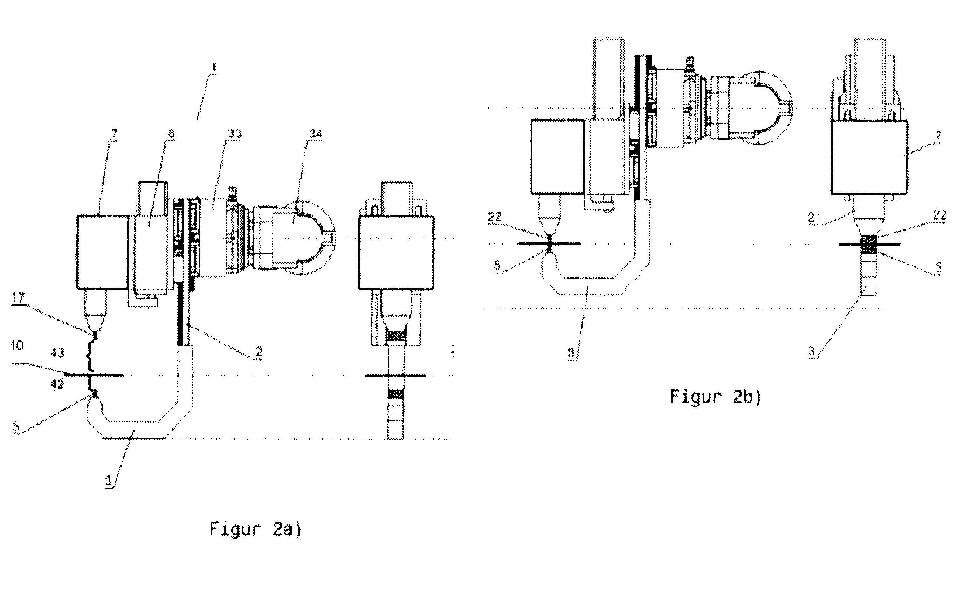

Die Arbeitsweise der erfindungsgemäßen Laser-Schweißzange (1) sowie des Ausgleichsmoduls (33) werden nachfolgend näher anhand der Figuren 2a, 2b erläutert. Figur 2a zeigt, wie die geöffnete Laser-Schweißzange (1), gehalten von dem Roboterarm (34) eines Roboters an miteinander zu verbindenden Werkstücken(10) in Position gebracht wird. Das Unterwerkzeug (3), das am Zangengestell (2) befestigt ist, hat bei nicht aktiviertem Ausgleichsmodul (33) einen definierten Abstand (42) zum Werkstück von beispielsweise 2 bis 3 mm. Dieser Abstand (42) ist so gewählt, dass ein schnelles Anfahren der Schweißposition durch den Roboter unter Einbeziehung von etwaigen Werkstückpositionsschwankungen jederzeit möglich ist. Der Abstand (43) des Lasermoduls (7) zum Werkstück ist innerhalb des Gesamthubs der Verfahreinheit (6) frei programmierbar und beträgt beispielsweise 150 mm.

Mit dem Positionieren der Laser-Schweißzange (1) an den Werkstücken (10) wird die Schließfunktion der Laser-Schweißzange (1) gestartet. Dabei wird zunächst das Ausgleichsmodul (33) aktiviert, indem der Kurzhub-Zylinder (39) aktiviert wird und das Unterwerkzeug (3) mit dem Druckstück (5) mit einer definierten Kraft gegen eines der zu verschweißenden Werkstücke (10) presst. Diese Kraft ist so bemessen, dass sich das Unterwerkzeug (3) am Werkstück schwimmend ausrichtet, ohne jedoch die Position des Werkstücks zu verändern. Die schwimmende Ausrichtung bei definierter Kraft wird auch bei Werkstückspositionsschwankungen durch die Federdruckeinheit (41) gewährleistet. Zeitgleich zur Aktivierung des Ausgleichsmoduls (33) wird die Verfahreinheit (6) gestartet. Bedingt durch den größeren Abstand (43) zum Werkstück (10) trifft das Lasermodul mit dem Austrittsschlitz (17) bei gleicher Bewegungsgeschwindigkeit etwas später auf dem anderen Werkstück (10) auf. Während des Zusammenfahrens setzen das Druckstück (5) des Unterwerkzeugs (3) sowie das Druckstück (22) des Lasermoduls (7) auf den Werkstücken (10) fluchtend zueinander auf und fügen die zu verschweißenden Werkstücke (10) passgenau zusammen. Erst nach dem Aufsetzen des Druckstücks (22) des Lasermoduls (7) kann der Schweißprozess begonnen werden.

Durch Bewegung des Kollimators (9) längs des Linearschlittens (14) bewegt sich der in Richtung des Austrittsschlitzes (17) fokussierte Laserstrahl (11) parallel zu der Bewegungslinie (13) des Kollimators. Entlang des von dem Austrittsschlitz (17) umgebenen Oberflächenbereichs des Werkstücks (10) kann auf der Länge des Austrittsschlitzes eine Punktschweißnaht oder eine durchgehende Schweißnaht gelegt werden.

### Bezugszeichenliste

| **Nr.** | **Bezeichnung** | **Nr.** | **Bezeichnung** |
|---|---|---|---|
| 1. | Laserschweißzange | 23. | Stellantrieb |
| 2. | Zangengestell | 24. | Gehäuseaufnahme |
| 3. | Unterwerkzeug | 25. | Linearführung |
| 4. | freies Ende | 26. | Halterung |
| 5. | Druckstück | 27. | Haltewinkel |
| 6. | Verfahreinheit | 28. | Antriebsstange |
| 7. | Lasermodul | 29. | Führungselement |
| 8. | Faser | 30. | --- |
| 9. | Kollimator | 31. | Nuten |
| 10. | Werkstück(e) | 32. | Strecke |
| 11. | Laserstrahlung | 33. | Ausgleichsmodul |
| 12. | Linearantrieb | 34. | Roboterarm |
| 13. | Achse | 35. | Wechselflansch |
| 14. | Linearschlitten | 36. | Ausgleichsgrundgestell |
| 15. | Zugmittelgetriebe | 37. | Linearführung |
| 16. | Stellantrieb | 38. | Befestigungsflansch |
| 17. | Austrittsschlitz | 39. | Kurzhubzylinder |
| 18. | Gehäuse | 40. | --- |
| 19. | Abschnitt | 41. | Federdruckeinheit |
| 20. | --- | 42. | Abstand |
| 21. | Gehäusefortsatz | 43. | Abstand |
| 22. | Druckstück | | |

## Patentansprüche

1. Laser-Schweißwerkzeug (1) zur Erzeugung einer Schweißnaht zum Verbinden von Werkstücken (10), dessen Laserstrahl mittels eines Linearantriebs (12) entlang der Schweißnaht bewegbar ist, wobei ein Kollimator (9) an dem Linearantrieb (12) angeordnet ist, der eine Bewegung des Kollimators (9) entlang einer vorgegeben Bewegungslinie (13) ermöglicht, und wobei der Linearantrieb (12) mit dem Kollimator (9) in einem einen Austrittsschlitz (17) für die Laserstrahlen (11) aufweisenden Gehäuse (18) angeordnet ist, wobei die Bewegungslinie (13) des Kollimators (9) parallel zu dem Austrittschlitz (17) verläuft und der Kollimator (9) so ausgerichtet ist, dass die Laserstrahlen (11) ausschließlich durch den Austrittsschlitz (17) hindurch aus dem Gehäuse (18) austreten **dadurch gekennzeichnet, dass**
- der Laser ein Faserlaser ist, der eine Faser (8) zur Lichtleitung, eine Optik zum Einkoppeln der Laserstrahlung einer Strahlungsquelle in die Faser (8) und den mit der Faser verbunden Kollimator (9) zur Fokussierung des Verlaufs der Laserstrahlen (11) umfasst
- an dem Gehäuse (18) ein Schaltelement angeordnet ist, das beim Aufsitzen des Austrittschlitzes (17) auf einem der Werkstücke (10) die Energieversorgung des Faserlasers einschaltet.

2. Laser-Schweißwerkzeug nach Anspruch 1, **dadurch gekennzeichnet, dass** sich das Gehäuse (18) in Richtung des Austrittsschlitzes (17) trichterförmig verjüngt.

3. Laser-Schweißwerkzeug nach Anspruch 1 oder 2, **dadurch gekennzeichnet, dass** das Laser-Schweißwerkzeug als Schweißzange (1) mit einem Zangengestell (2), einem an dem Zangengestell (2) angeordneten Unterwerkzeug (3) und einer das Gehäuse (18) gegenüber dem Zangengestell (2) bewegenden Verfahreinheit (6) ausgestaltet ist, wobei sich am freie Ende des Unterwerkzeugs (3) ein Druckstück (5) befindet und das Druckstück (5) und die damit fluchtende Austrittsöffnung (17) mittels der Verfahreinheit (6) aufeinander zu und voneinander weg bewegbar sind.

4. Laser-Schweißwerkzeug nach Anspruch 3, **dadurch gekennzeichnet, dass** das Druckstück (5) der Form des Austrittschlitzes (17) entspricht.

5. Laser-Schweißwerkzeug nach Anspruch 3 oder 4, **dadurch gekennzeichnet, dass** die Verfahreinheit (6) einen an dem Zangengestell (2) gehaltenen Stellantrieb(23), eine Gehäuseaufnahme (24) sowie eine Linearführung (25) für die Gehäuseaufnahme (24) aufweist.

6. Laser-Schweißwerkzeug nach einem der Ansprüche 1 bis 5, **dadurch gekennzeichnet, dass** der Linearantrieb (12) für den Kollimator (9) einen einachsigen Linearschlitten (14) aufweist, der mit einem Stellantrieb (16) verbunden ist.

7. Laser-Schweißwerkzeug nach einem der Ansprüche 1 bis 6, **dadurch gekennzeichnet, dass** das Zangengestell (2) auf einem Ausgleichsmodul (33) angeordnet ist, das geringfügige Ausgleichsbewegungen des Zangengestells (2) gegenüber einem Roboterarm (34) zur Bewegung des Laser-Schweißwerkzeugs zulässt.

8. Laser-Schweißwerkzeug nach Anspruch 7, **dadurch gekennzeichnet, dass** das Ausgleichsmodul (33) ein Ausgleichsgrundgestell (36) zur Befestigung an dem Roboterarm (34) aufweist, an dem Ausgleichsgrundgestell (36) eine Linearführung (37) für das Zangengestell (2) mit übereinstimmender Bewegungsrichtung wie die Linearführung (25) für die Gehäuseaufnahme (24) angeordnet ist und das Ausgleichsmodul (33) einen auf das Zangengestell (2) wirkenden Kurzhub-Linearantrieb (39) aufweist, in dessen geradlinig wirkenden Kraftfluss eine Federdruckeinheit (41) geschaltet ist.

## Claims

1. Laser welding tool (1) for producing a weld seam for joining workpieces (10), the laser beam whereof is movable along a weld seam by means of a linear drive (12), wherein a collimator (9) is disposed on the linear drive (12), which enables a movement of the collimator (9) along a predetermined movement line (13), and wherein the linear drive (12) is arranged with the collimator (9) in a housing (18) having an outlet slit (17) for the laser beams (11), wherein the movement line (13) of the collimator (9) runs parallel to the outlet slit (17) and the collimator (9) is aligned such that the laser beams (11) exit exclusively through the outlet slit (17) through the housing (18), **characterized in that**
- the laser is a fibre laser which comprises a fibre (8) for guiding light, optics for coupling the laser radiation of a radiation source into the fibre (8) and the collimator (9) connected to the fibre for focussing the course of the laser beams (11),
- a switching element is disposed on the housing (18) which switches on the power supply of the fibre laser when the outlet slit (17) sits on one of the workpieces (10).

2. The laser welding tool according to claim 1, **characterized in that** the housing (18) tapers in a funnel shape in the direction of the outlet slit (17).

3. The laser welding tool according to claim 1 or 2, **characterized in that** the laser welding tool is configured as welding tongs (1) comprising a tong frame (2), a lower tool (3) disposed on the tong frame (2) and a traversing unit (6) which moves the housing (18) with respect to the tong frame (2), wherein a pressure piece (5) is located at the free end of the lower tool (3), and the pressure piece (5) and the outlet opening (17) aligned therewith are moveable towards one another and away from one another by means of the traversing unit (6).

4. The laser welding tool according to claim 3, **characterized in that** the pressure piece (5) corresponds to the shape of the outlet slit (17).

5. The laser welding tool according to claim 3 or 4, **characterized in that** the traversing unit (6) comprises an actuator (23) held on the tong frame (2), a housing receptacle (24) and a linear guide (25) for the housing receptacle (24).

6. The laser welding tool according to one of claims 1 to 5, **characterized in that** the linear drive (12) for the collimator (9) has a uniaxial linear carriage (14) which is connected to an actuator (16).

7. The laser welding tool according to one of claims 1 to 6, **characterized in that** the tong frame (2) is disposed on a compensating module (33) which allows slight compensating movements of the tong frame (2) with respect to a robot arm (34) for movement of the laser welding tool.

8. The laser welding tool according to claim 7, **characterized in that** the compensating module (33) has a compensating base frame (36) for fixing to the robot arm (34), a linear guide (37) for the tong frame (2) having the same direction of motion as the linear guide (25) for the housing receptacle (24) is disposed on the compensating base frame (36) and the compensating module (33) has a short-stroke linear drive (39) acting on the tong frame (2), a spring pressure unit (41) being connected in the rectilinearly acting force flow thereof.

## Revendications

1. Outil de soudage au laser (1) pour créer une soudure destinée à relier des pièces d'oeuvre (10), dont le faisceau laser est déplaçable le long de la soudure au moyen d'un entraînement linéaire (12), un collimateur (9) étant disposé sur l'entraînement linéaire (12) qui permet un déplacement du collimateur (9) le long d'une ligne de déplacement (13) prédéfinie et l'entraînement linéaire (12) étant disposé avec le collimateur (9) dans un boîtier (18) comportant une fente de sortie (17) pour les faisceaux laser (11), la ligne de déplacement (13) du collimateur (9) s'étendant à la parallèle de la fente de sortie (17) et le collimateur (9) étant orienté de sorte que les faisceaux laser (11) sortent du boîtier (18) uniquement à travers la fente de sortie (17), **caractérisé en ce que**
- le laser est un laser à fibre qui comprend une fibre (8) pour guider les ondes optiques, une optique pour injecter le rayonnement laser d'une source de rayonnement dans la fibre (8) et le collimateur (9) relié à la fibre pour focaliser le trajet des faisceaux laser (11),
- sur le boîtier (18) est disposé un élément commutateur, qui lorsque la fente de sortie (17) repose sur l'une des pièces d'oeuvre (10) met en route l'alimentation en énergie du laser à fibre.

2. Outil de soudage au laser selon la revendication 1, **caractérisé en ce que** le boîtier (18) se rétrécit en forme d'entonnoir en direction de la fente de sortie (17).

3. Outil de soudage au laser selon la revendication 1 ou la revendication 2, **caractérisé en ce que** l'outil de soudage au laser est conçu en tant que pince à souder (1), avec un bâti de pince (2), un outil inférieur (3) disposé sur le bâti de pince (2) et une unité de déplacement (6) mobile par rapport au bâti (18) de pince (2), sur l'extrémité libre de l'outil inférieur (3) se trouvant une pièce de pression (5) et le pièce de pression (5) et l'orifice de sortie (17) aligné sur celle-ci étant déplaçables en se rapprochant l'un vers l'autre ou en s'éloignant l'un de l'autre au moyen de l'unité de déplacement (6).

4. Outil de soudage au laser selon la revendication 3, **caractérisé en ce que** la pièce de pression (5) correspond à la forme de la fente de sortie (17).

5. Outil de soudage au laser selon la revendication 3 ou la revendication 4, **caractérisé en ce que** l'unité de déplacement (6) comporte un mécanisme de commande (23) maintenu sur le bâti de pince (2), un logement de boîtier (24), ainsi qu'un guidage linéaire (25) pour le logement de boîtier (24).

6. Outil de soudage au laser selon l'une quelconque des revendications 1 à 5, **caractérisé en ce que** l'entraînement linéaire (12) pour le collimateur (9) comporte un chariot linéaire (14) monoaxial qui est relié au mécanisme de commande (16).

7. Outil de soudage au laser selon l'une quelconque des revendications 1 à 6, **caractérisé en ce que** le bâti de pince (2) est disposé sur un module de compensation (33) qui admet de faibles mouvements de compensation du bâti de pince (2) par rapport à un bras de robot (34) pour le déplacement de l'outil de soudage au laser.

8. Outil de soudage au laser selon la revendication 7, **caractérisé en ce que** le module de compensation (33) comporte un châssis compensateur de base (36) destiné à être fixé sur le bras de robot (34), **en ce que** sur le châssis compensateur de base (36) est disposé un guidage linéaire (37) pour le bâti de pince (2) avec un sens de déplacement concordant à celui du guidage linéaire (25) pour le logement de boîtier (24) et **en ce que** le module de compensation (33) comporte un entraînement linéaire (39) à faible course agissant sur le bâti de pince (2) dans le flux de force à effet rectiligne duquel est monté une unité de pression à ressort (41).
